Europäisches Patentamt

European Patent Office

Office européen des brevets

Veröffentlichungsnummer: **0 406 543 A2**

# EUROPÄISCHE PATENTANMELDUNG

Anmeldenummer: 90108971.4

Anmeldetag: 12.05.90

Int. Cl.5 **F16F 9/44**

Priorität: 03.07.89 DE 3921819

Veröffentlichungstag der Anmeldung:
09.01.91 Patentblatt 91/02

Benannte Vertragsstaaten:
DE ES FR GB IT SE

Anmelder: **AUGUST BILSTEIN GMBH & CO KG KG**
**August-Bilstein-Strasse, Postfach 1151**
**D-5828 Ennepetal(DE)**

Erfinder: **Grün, Wolfgang, Dipl.-Ing.**
**Ostlandring 7**
**D-5828 Ennepetal 1(DE)**
Erfinder: **Kurth, Stefan, Dipl.-Ing**
**Brüsseler Strasse 14**
**D-5000 Köln 90(DE)**
Erfinder: **Hölscher, Reinhard, Dr.-Ing.**
**Kottenstrasse 25**
**D-4796 Salzkotten(DE)**

## Zug- und Druckstufen unabhängige Steuerung für einen hydraulischen Schwingungsdämpfer.

Die Erfindung betrifft eine Steuerung für ein Steuerventil, welches sich innerhalb der Bypass-Passage befindet. Das Steuerventil ist so ausgebildet, daß z. B. bei einer Kennung hart in der Zugstufe die Kennung der Druckstufe automatisch weich ist. Zwischenstellungen gibt es nicht. Gleichzeitig sind an den Auslässen der Bypass-Passage Rückschlagventile sowohl für die Druck-, als auch für die Zugstufe angeordnet. Der Antrieb des Steuerventils wird über ein Stellglied vorgenommen. Der Dämpfungskolben ist in diesem Falle nur ein Erfüllungselement, um unabhängige Kennlinien mit Hilfe eines Zusatzventils zu erzeugen.

Fig.1

EP 0 406 543 A2

# ZUG- UND DRUCKSTUFENUNABHÄNGIGE STEUERUNG FÜR EINEN HYDRAULISCHEN SCHWINGUNGS-DÄMPFER

Die Erfindung betrifft eine zug- und druckstufenunabhängige Steuerung für einen hydraulischen Schwingungsdämpfer. Gerade bei semiaktiv geregelten Fahrzeugen, welche nach der Sky-Hook-Regelphilosophie arbeiten, ist eine eindeutige Steuerung des Schwingungsdämpfers vonnöten. Bei herkömmlichen Systemen wird für diese Regelphilosophie sowohl die Radschwingung als auch die Aufbauschwingung des Fahrzeuges gemessen. Hierdurch ergeben sich enorme Nachteile, die darin zu sehen sind, daß die Radschwingung eine wesentlich höhere Frequenz hat als die Aufbauschwingung des Fahrzeuges. Die Aufbauschwingung eines Fahrzeuges wird aber durch die entstandene Radschwingung erzeugt. Aufgrund der höheren Frequenz der Radschwingung sind bei herkömmlichen bekannten Systemen auch die Schaltzyklen entsprechend häufiger. Bei der Messung der Relativgeschwindigkeit der Aufbauschwingung soll der Dämpfer dazu angeregt werden, bei jedem Null-Durchgang der Schwingungskennlinie zu schalten. Da diese Frequenz gegenüber der Aufbauschwingung des Fahrzeuges relativ klein ist, sind auch zwangsläufig entsprechend weniger Schaltzyklen zu erwarten.

Hydraulische Schwingungsdämpfer, bei denen die Bypass-Passage in ihrer Querschnittsveränderung selektiv verändert wird, sind aus der DE-OS 34 34 566 bekanntgeworden.

Mit der DE-PS 33 46 352 ist ein Schwingungsdämpfer bekanntgeworden, in dem sich an der Kolbenstange bewegliche Steuerschieber befinden. Der Antrieb der Steuerschieber wird mittels Elektromagneten vorgenommen. Auch die DE-OS 36 05 182 offenbart einen Bypass, der durch einen elektrisch gesteuerten Steuerschieber freigebbar bzw. verschließbar ist.

Ein Schwingungsdämpfer mit verstellbarer Dämpfkraft ist der DE-OS 35 32 292 zu entnehmen. Dieser Dämpfer hat jedoch eine variable Dämpfungskennung für die Zug- und Druckstufenseite über den gesamten Geschwindigkeitsbereich. Dies wird dadurch erreicht, daß ein Schieber zwei voneinander getrennte und steuerbare Bypass-Kanalsysteme bildet. Rückschlagventile, die einer Bypass-Passage vorgeschaltet sind, sind aus der DE-PS 35 18 327 und aus der DE-OS 32 40 984 zu entnehmen.

Die DE-OS 36 44 447 zeigt einen Schwingungsdämpfer, der mit geringem baulichen Aufwand sowohl eine passive als auch eine aktive Dämpfungssteuerung ermöglicht. Mit dieser Vorrichtung kann die aktive Dämpfungssteuerung auch unsymmetrisch erfolgen. Der Vorteil der Erfindung liegt darin, daß insbesondere die Verwendung nur eines einzigen Steuerschiebers nötig ist.

Die Aufgabe der Erfindung ist es, einen hydraulischen Dämpfer derart zu schaffen, bei dem das Anfahren in der Zug- bzw. Druckstufe von unabhängigen Kennlinien realisiert werden kann. Hierzu soll es unerheblich sein, welches Element zur Steuerung verwendet wird. Es muß erreicht werden, daß bei semiaktiv geregeltem Fahrwerk eine optimale Dämpfkraft in Abhängigkeit vom Laufzustand des Fahrzeuges hergestellt wird.

Die Lösung der Aufgabe wird durch das Kennzeichen des Patentanspruches 1 gelöst. Es wird der Dämpfungskolben des Schwingungsdämpfers als Erfüllungselement benutzt, um unabhängige Kennlinien zu erzeugen mit Hilfe von Zusatzventilen, welche sich innerhalb der Bypass-Passage befinden. Der Sinn und Zweck ist das Anfahren von zug- und druckstufenunabhängigen Kennlinien. Wichtig ist jedoch, daß zur Erfüllung dieser Ansprüche das Erfüllungselement in ganz bestimmter Art und Weise gesteuert wird, d. h., es dürfen von dem Steuerelement nur zwei Schaltstellungen eingenommen werden können. Es wird also ein Ventil benötigt, welches das Dämpfungsmedium in Bewegung des Dämpfers über den Dämpfungskolben verteilt sowohl auf das Zusatzventil als auch auf den Arbeitskolben. Dieses gilt sowohl für die Zug- als auch für die Druckstufe. Es ist jedoch dabei zu beachten, daß immer ein Ventil geschlossen sein muß, d. h., es ist entweder die Druckstufe oder die Zugstufe geschlossen. Die Bezeichnung der Unabhängigkeit bezieht sich hier nicht auf das Steuern, sondern auf die Erzeugung der verschiedenen Dämpfungskennlinien. Zur Realisierung dieser Forderung muß die Aufbauschwingung des Fahrzeuges gemessen werden. Dagegen kann die Messung der Radschwingung des Fahrzeuges unterbleiben. Gegenüber der Radschwingung ist die Aufbauschwingung eines Fahrzeuges in seiner Frequenz relativ gering. Aus dieser Tatsache heraus ergeben sich für die Schaltung des Dämpfers, der jeweils im Null-Durchgang und bei Anwendung einer entsprechenden Regelphilosophie bei einer Schwingung geschaltet wird, wesentlich geringere Schaltzyklen. Würde jedoch ein Relativgeschwindigkeitssensor zur Messung der Radschwingung verwendet, so muß bei jedem Null-Durchgang dieser hohen Frequenz geschaltet werden. Die Schaltfrequenz des erfindungsgemäßen Gegenstandes ist aber demzufolge wesentlich langsamer und kann auch genauer dadurch sein, weil nicht die Radbewegung gemessen zu werden braucht. Damit stellt das vorgestellte System eine recht preiswerte Alternative zu den bisher bekannten Systemen dar. Bei der bisher bekannten Regelphilosophie des Sky-Hook-Prinzips wird die Aufbaugeschwindigkeit des Fahrzeuges mit der Relativgeschwindigkeit multipliziert. Ergibt das Produkt einen Wert > oder = 0, so muß der Dämpfer eingeschaltet werden. Ist dieses Produkt jedoch < 0, so wird der Dämpfer ausgeschaltet. Bei dem vorliegenden erfindungsgemäßen Gegenstand wird allerdings nur das Zusatzventil, welches sich innerhalb der Bypass-Passage befindet, zu- oder abgeschaltet. Mit dieser Maßnahme ist es möglich, den Kennungsverlauf wesentlich zu beeinflussen. Es wird durch Zu- bzw. Abschaltung erreicht, daß z. B. von einer höheren auf eine niedrige Kennlinie umgeschaltet werden kann. Aus dieser Folgerung heraus befinden sich innerhalb der Bypass-Passage Steuerventile, welche durch einen geeigneten Antrieb in zwei Stellungen gebracht werden können: Auf und Zu. Gleichzeitig sind die Austrittsöffnungen der Bypass-Passage mit Rückschlagventilen versehen, damit ein Rückfluß des Dämpfungsmediums verhindert wird.

Die Erfindung soll an schematisch dargestellten Ausführungsbeispielen näher erläutert werden. Es zeigen

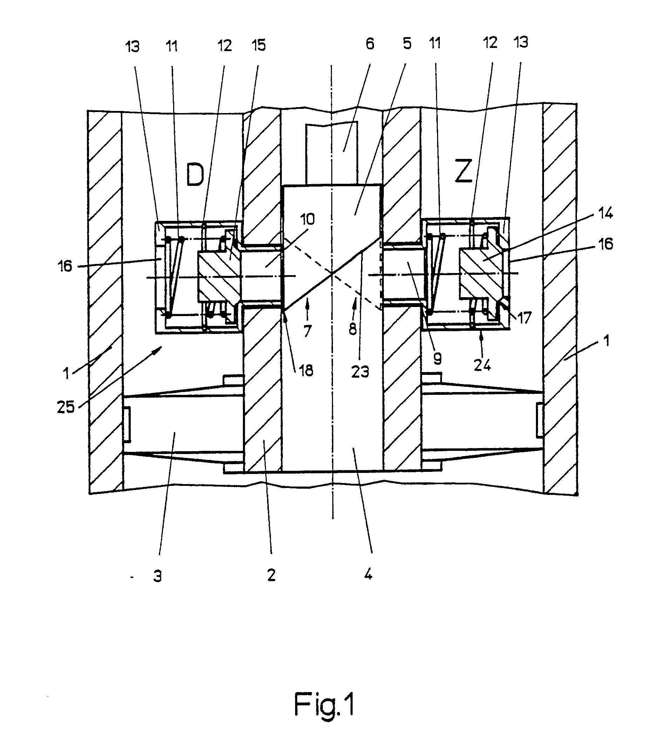

Fig. 1: einen Schwingungsdämpfer im Schnitt mit Rückschlagventilen, die mit Druckfedern beaufschlagt sind

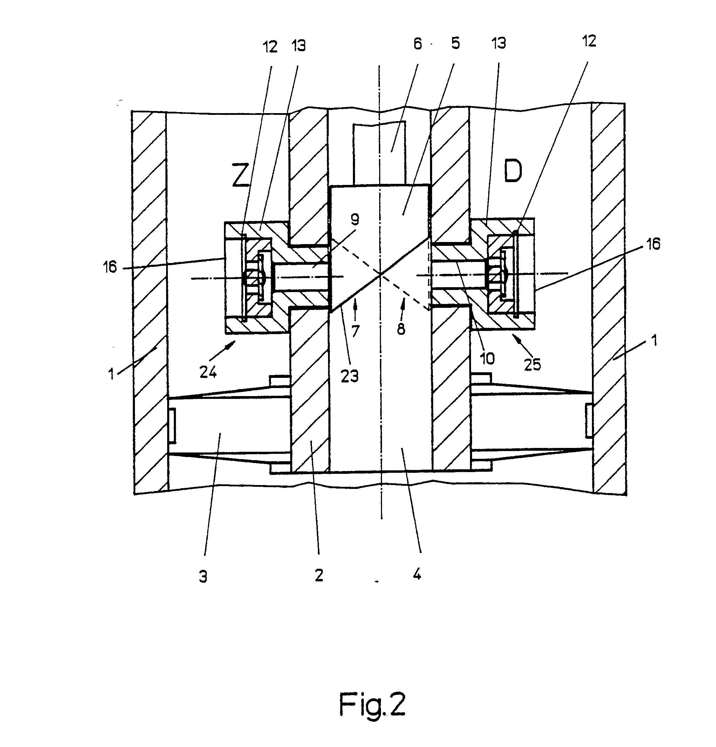

Fig. 2: einen Schwingungsdämpfer im Schnitt, bei dem die Rückschlagventile mit Federscheiben beaufschlagt sind
Fig. 3: Kurvenverlauf der Kennung
Fig. 4: Steuerventil in der Perspektive

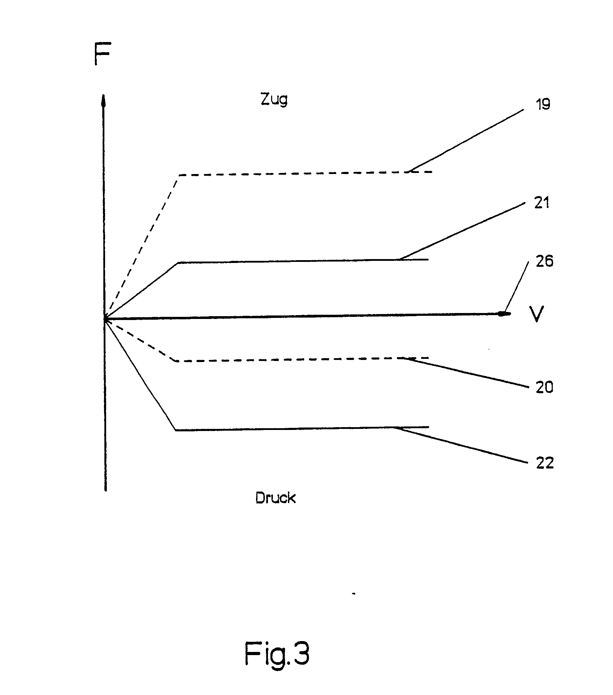

Das Steuerventil (5) in der Bypass-Passage (4) kann nur zwei Positionen einnehmen, nämlich die Position (7) und (8). Hierbei ist die Position (7) in den Figuren als durchgezogener Strich dargestellt. Dagegen ist die Position (8) gestrichelt dargestellt. Wird z. B. die Kolbenstange (2) mit dem daran befindlichen Dämpfungskolben (3) in dem Zylinder (1) nach oben bewegt, so entsteht automatisch innerhalb des Dämpfungskolbens (3) ein höherer Druck. Dieser Druck beaufschlagt automatisch auch das Rückschlagventil (24). Der Ventilschieber (14) wird durch das Rückstellglied (11) auf den Ventilsitz (17) gepreßt. Damit ist das Rückschlagventil geschlossen. Der anstehende Druck des Dämpfungsmediums beaufschlagt über die Bohrung (16) den Schieber (14) des Rückschlagventiles (24). Bei Überschreiten der Gegenkraft des Rückstellgliedes (11) öffnet das Rückschlagventil (24) und läßt damit einen Druckausgleich in die untere Kammer über der Bypass-Passage (4) zu. Dem Schieber (14) ist ein Anschlag (12) nachgeschaltet. Das Steuerventil (5) steht in der Stellung (7), d. h., das Dämpfungsmedium kann über den Auslaß (9) in die Bypass-Passage (4) ungehindert eintreten. Dieses hat zur Folge, daß in dieser Stellung die Zugstufe eine weiche Kennung hat. Die Kennliniendarstellung in Fig. 3 gibt mit dem Kurvenverlauf (19) die Verhältnisse wieder. So gibt der schematisch dargestellte Kurvenverlauf (19) eine weiche Kennung in der Zugstufe wieder. Dieser Kennungsverlauf wird dadurch erreicht, daß sowohl die Bypass-Passage als auch das Hauptventil im Dämpfungskolben geöffnet sind. Damit kann das Dämpfungsmediun ungehindert hindurchströmen. Wird jedoch aufgrund der angestrebten Regelphilosophie das Steuerventil in der Bypass-Passage geschlossen, so kann nur noch das Dämpfungsventil innerhalb des Dämpfungskolbens wirksam.werden. Damit ergibt sich automatisch eine härtere Kennung, die in dem Kurvenverlauf (21) dargestellt ist. Zwischen diesen beiden Kurvenscharen (19) und (21) kann also mit Hilfe des Zusatzventiles und aufgrund der gewünschten Regelphilosophie eine unabhängige Steuerung sowohl für die Druck- als auch für die Zugstufe realisiert werden. Die dargestellten Kurvenverläufe (20) und (22) geben die Situation in der Druckstufe wieder. Wenn in der Zugstufe die Kennung weich ist, so ist gleichzeitig das Rückschlagventil (25) geschlossen sowohl durch den Schieber (15) als auch durch das Steuerventil (5). Ein Druckausgleich in dieser Richtung kann nicht stattfinden. Würde das Steuerventil (5) nicht betätigt, so würde bei einem Einfahren der Kolbenstange (2) in den Zylinder (1) die Bypass-Passage (4) für den Strom des Dämpfungsmediums geschlossen sein. Sowohl das Rückschlagventil (25} und auch das Rückschlagventil (24) sind geschlossen. Das Rückschlagventil (25) wird durch das Steuerventil (5) geschlossen. Dagegen ist zwar der Auslaß (9) der Bypass-Passage (4) geöffnet, jedoch kann das Dämpfungsmedium nicht durch das Rückschlagventil (24) in den oberen Zylinderraum gelangen. Aufgrund des Rückstellgliedes (11) wird der Schieber (14) des Rückschlagventils (24) in den Ventilsitz (17) gedrückt, und damit ist die Bohrung (16) verschlossen. Diese Wirkungsweise zeigt, daß jeweils eine Richtung entweder eine harte oder eine weiche Kennung hat, solange nicht das Steuerventil (5) betätigt wird. Wird jedoch das Steuerventil (5) betätigt, so sind die Verhältnisse innerhalb des Schwingungsdämpfers umgekehrt. Wird z. B. das Steuerventil (5) über den im Fahrzeug befindlichen nicht dargestellten Rechner betätigt, d. h., der Motorantrieb dreht das Steuerventil (5) um z. B. 180° herum, so würde der Auslaß (9) der Bypass-Passage verschlossen. Bei anders gestalteten Steuerventilen (5) kann der Verstellwinkel auch z. B. 90° betragen. Es ist aber auch möglich, den Ventilschieber als Glockenschieber auszuführen. Gleichzeitig wird jedoch der Auslaß der Bypass-Passage (10) geöffnet. Dieses entspricht der Darstellung (8) in den Figuren. Würde beispielsweise in der nun ausgeführten Stellung der Kolbenstange (2) der Dämpfungskolben nach oben bewegt, so würde wiederum oberhalb des Dämpfungskolbens (3) ein Überdruck herrschen. Dieser Überdruck kann sich jedoch nicht über die Bypass-Passage entspannen, weil das Rückschlagventil geschlossen ist. In diesem Falle müßte das gesamte Dämpfungsmedium über die in dem Dämpfungskolben (3) vorhandenen Ventile strömen. Die Kennung des Schwingungsdämpfers wäre in diesem Fall als hart zu bezeichnen. Würde nun der Dämpfungskolben (3) bei gleicher Steuerventilstellung (8) nach unten bewegt, so ist in diesem Falle die Bypass-Passage (4) für das Dämpfungsmedium wieder geöffnet. Über den Auslaß (10) kann das Öl gegen den Schieber (15) des Rückschlagventils (25) strömen, und bei Überwindung der Kräfte des Rückstellgliedes (11) in den oberen Bereich über die Bohrung (16) des Dämpfers strömen. In diesem Falle wäre die Kennung des Schwingungsdämpfers weich.

Die Beschreibung zeigt, daß aufgrund der gewünschten Stellung des Steuerventiles (5) entweder eine harte Zugstufe bei gleichzeitig weicher Druckstufe realisiert werden kann oder aber, wenn die Zugstufe weich ist, ist entsprechend die Druckstufe hart in ihrer Kennung. Das Steuerventil (5) kann keine Mittelstellungen einnehmen.

Betrachtet man die in der Fig. 3 dargestellten schematischen Kennlinien, so ist es so, daß sich an der Grundlinie (26) z. B. die Kurven (19) und (20) in (21) und (22) spiegeln. Dieses hat zur Folge, daß mit zwei Positionsstellungen des Steuerventils (5) die Kennung des Schwingungsdämpfers umgedreht werden kann. Dieses ist aber nur möglich durch den vorgeschriebenen Weg der Erfindung. Gleichzeitig aber kann auch noch das Verhalten der Rückschlagventile (24) und (25) dahingehend beeinflußt werden, indem entweder ein progressiver oder degressiver Kennungsverlauf verwendet wird. Da der Kennungsverlauf einen ganz entscheidenden Beitrag zur Fahrzeugsicherheit bzw. auch zum Komfort Fahrzeuges liefert, ist es von besonderer Wichtigkeit, die Steuerung bzw. Regelung eines Schwingungsdämpfers vorzunehmen.

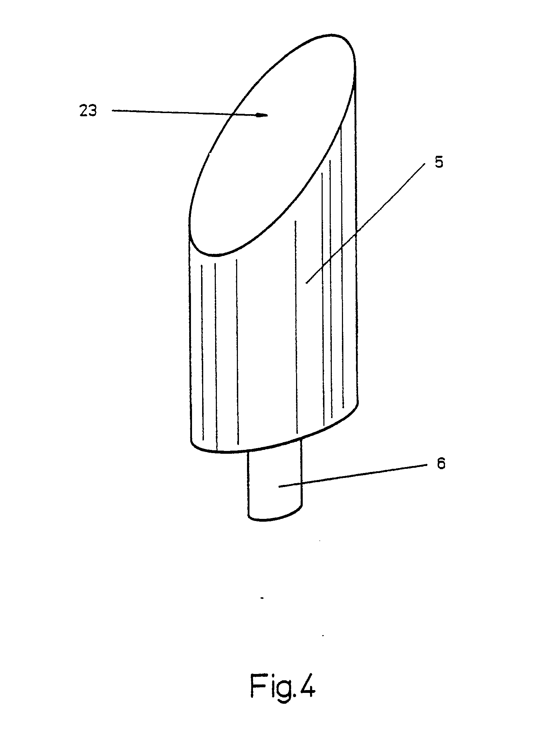

Bei dem erfindungsgemäßen Gegenstand ist die Ausgestaltung des Steuerkolbens von untergeordneter Bedeutung. Es muß jedoch sichergestellt werden, daß die Steuerelemente nur zwei stabile Schaltpositionen einnehmen können. Das in Fig. 4 dargestellte Steuerventil gibt eine mögliche Gestaltung eines verwendbaren Steuerventils wieder.

Bezugszeichenverzeichnis

1. Zylinder
2. Kolbenstange
3. Dämpfungskolben
4. Bypass-Passage
5. Steuerventil
6. Anschluß für einen Antrieb
7. Stellung des Steuerventils
8. Stellung des Steuerventils
9. Auslaß der Bypass-Passage in der Druckstufe
10. Auslaß der Bypass-Passage in der Zugstufe
11. Rückstellglied
12. Anschlag
13. Gehäuse
14. Schieber
15. Schieber
16. Bohrung
17. Ventilsitz
18. Ventilabdichtung
19. weiche Kennung der Zugstufe
20. harte Kennung der Zugstufe
21. harte Kennung der Zugstufe
22. weiche Kennung der Druckstufe
23. Abschrägung
24. Rückschlagventil
25. Rückschlagventil

Ansprüche

1. Zug- und druckstufenunabhängige Steuerung für einen hydraulischen Einrohrschwingungsdämpfer, bei Kraftfahrzeugen zur Steuerung von Dämpfungsventilen, welche sich in hydraulisch regelbaren bzw. verstellbaren Schwingungsdämpfern befinden, die einseitig mit dem Dämpfungszylinder an der Radaufhängung und mit der beweglichen, in den Dämpfungszylinder eintauchenden Kolbenstange an der Karosserie befestigt sind, mit einem hydraulischen Medium, welches von dem Dämpfungszylinder aufgenommen wird, eine im Dämpfungszylinder bewegliche Kolbenstange, an deren unterem im Dämpfungszylinder befindlichen Ende ein Dämpfungskolben vorhanden ist, der das Innere des Dämpfungszylinders in zwei Kammern aufteilt, wobei der Dämpfungskolben mit Flüssigkeitsdurchtrittskanälen bzw. -ventilen für die Druck-und Zugstufe versehen ist, sich innerhalb der Kolbenstange eine Bypass-Passage befindet, an deren Austrittsöffnungen oberhalb des Dämpfungskolbens sowohl für die Druck- als auch für die Zugstufe druckbeaufschlagte Ventile vorhanden sind, ferner ein Sensor für die Messung der Aufbauschwingung des Fahrzeuges vorhanden ist, dadurch gekennzeichnet, daß zur Realisierung von unabhängigen Dämpfungskennlinien jeweils eine Dämpfungsmediumsaustrittsöffnung (9) oder (10) der Bypass-Passage (4), sowohl in der Druck- als auch in der Zugstufe jeweils mit einem Steuerventil (5) beaufschlagt werden, welche in Abhängigkeit der Aufbaugeschwindigkeit gesteuert werden und das Steuerventil (5) mit einem Rückschlagventil (24) oder (25) versehen ist.

2. Zug- und druckstufenunabhängige Steuerung nach Anspruch 1, dadurch gekennzeichnet, daß das Steuerventil (5) dann betätigt wird, wenn der positive oder negative Betrag der Schwingung der Aufbaugeschwindigkeit Null ist.

3. Zug- und druckstufenunabhängige Steuerung nach Anspruch 1, dadurch gekennzeichnet, daß die Steuerung des Steuerventils (5) so realisiert ist, daß die Kennung der Zugstufe hart ist und gleichzeitig die Kennung der Druckstufe weich ist.

4. Zug- und druckstufenunabhängige Steuerung nach Anspruch 1, dadurch gekennzeichnet, daß die Steuerung des Steuerventils (5) so realisiert ist, daß die Kennung der Zugstufe weich ist und gleichzeitig die Kennung der Druckstufe hart ist.

5. Zug- und druckstufenunabhängige Steuerung nach den Ansprüchen 1 bis 4, dadurch gekennzeichnet, daß das Steuerventil (5) durch einen Stellmotor oder Schrittschaltmotor oder elektrotechnischen Antrieb gesteuert wird.

6. Zug- und druckstufenunabhängige Steuerung nach den Ansprüchen 1 bis 5, dadurch gekennzeichnet, daß die Ansteuerung des Stellorganes des Steuerventils (5) durch einen im Fahrzeug vorhandenen Rechner vorgenommen wird.

7. Zug- und druckstufenunabhängige Steuerung nach den Ansprüchen 1 bis 6, dadurch gekennzeichnet, daß die an den Austrittsöffnungen (9) und (10) der Bypass-Passage (4) sitzenden Rückschlagventile (24 und 25) einen progressiven Kennungsverlauf haben.

8. Zug- und druckstufenunabhängige Steuerung nach den Ansprüchen 1 bis 6, dadurch gekennzeichnet, daß die an den Austrittsöffnungen (9) und (10) der Bypass-Passage (4) sitzenden Rückschlagventile (24 und 25) einen degressiven Kennungsverlauf haben.

Fig.1

Fig.2

Fig.3

Fig.4